# EUROPÄISCHE PATENTSCHRIFT

(11) **EP 1 639 274 B1**
(45) Veröffentlichungstag und Bekanntmachung des Hinweises auf die Patenterteilung: **23.08.2006**
(21) Anmeldenummer: 04763034.8
(22) Anmeldetag: 28.06.2004
(51) Int. Cl.: F16H 39/06

(54) **VORRICHTUNG ZUR UMWANDLUNG EINER LINEARBEWEGUNG IN EINE DREHBEWEGUNG**
DEVICE FOR CONVERTING A LINEAR MOTION INTO A ROTATIONAL MOTION
DISPOSITIF POUR CONVERTIR UN MOUVEMENT LINEAIRE EN UN MOUVEMENT ROTATIF

(30) Priorität: 01.07.2003 DE 10329469
(43) Veröffentlichungstag der Anmeldung: 29.03.2006
(73) Patentinhaber: Ampler, Klaus, 04157 Leipzig (DE); Bernaczek, Boleslaw, 66-015 Przylep (PL)
(72) Erfinder: AMPLER, Klaus, 04157 Leipzig (DE); BERNACZEK, Boleslaw, PL-66-015 Przylep (PL); WAS, Marta, PL-03-369 Warschau (PL); WAS, Janusz, PL-03369 Warschau (PL)
(74) Vertreter: Köhler, Tobias
(86) Internationale Anmeldenummer: PCT/EP2004/006969
(87) Internationale Veröffentlichungsnummer: WO 2005/003598

(56) Entgegenhaltungen:
- EP-A- 0 190 988
- EP-A- 1 253 039
- FR-A- 2 070 534
- FR-A- 2 539 459
- US-A- 472 942
- US-A- 3 772 966
- US-A- 3 939 719
- US-A- 3 973 445

## Beschreibung

Der Gegenstand der Erfindung ist ein System zur Umwandlung einer Linearbewegung in eine Drehbewegung zur Umsetzung einer angebrachten Größe der linearen Verschiebung in ein, der angebrachten Kraft entsprechendes Drehmoment, mit voller Impulsausnutzung der wirkenden Kraft.

Die Konstruktion eines Kraftverstärkers, angewandt in Regelsystemen als Ausführungsvorrichtung, ist bekannt. Die Vorrichtung wandelt das gegebene Steuersignal in eine Linear- oder eine Drehverschiebung um. Eine solche Vorrichtung dient gewöhnlich zur Positionseinstellung von Regelelementen, wie Schieber, Ventile oder Stellklappen.

Es ist auch als Kurbel- und Lenksystem zur Umwandlung der Hin- und Herbewegung in eine Drehbewegung und umgekehrt bekannt. Ein solches System besteht aus Kurbel, Kurbelstange und Führung.

Aus der FR-A-2 070 534 ist eine Vorrichtung mit den Merkmale des Oberbegriffes des Anspruches 1 bekannt.

In den allgemein bekannten Lösungen wird die Kraftübertragung am Anfang und am Ende des Zyklus nach einer Null-Max-Kurve gestaltet, trotzdem dem, dass die angebrachte Kraft stets das Maximum beträgt, d. h. der Kraftimpuls wird nicht im Ganzen ausgenutzt. Solche Lösungen werden daher nur in Spezialkonstruktionen angewandt.

Der Erfindung gemäß besteht das System zur Umwandlung der Linearbewegung in eine Drehbewegung aus einer aktiven Zwillingsbaugruppe und einem Mechanismus zur Umwandlung und Steuerung der linearen Verschiebung In eine Drehbewegung. Das System enthält zwei hydraulische Wandler der Linearbewegung, integriert mit einem gemeinsamen, mit einer Arbeitsflüssigkeit gefüllten Ausgleichbehälter. Die Wandler sind mit einem Zahnstangenmechanismus zur Erzeugung der Drehbewegung verbunden. Jeder dieser Wandler besteht aus einer hydraulischen Pumpe und einem gesteuerten, hydraulisch gekoppelten Hydraulikgetriebe. Die erste Kolbenstange des ersten Kolbens und die zweite Kolbenstange des zweiten Kolbens des Getriebes bilden Führungen, die die Linearbewegung der Kolben auf das erste und das zweite angetriebene, drehbar am Gestell gelagerte Zahnrad übertragen. Die erste Kolbenstange und die zweite Kolbenstange des ersten und des zweiten Kolbens der Pumpen sind durch steife Zugstangen verbunden, die mit einer ersten Schubstange und einer zweiten Schubstange, durch Kettenkupplung verbunden sind. Der Drehmechanismus enthält ein Arbeitsrad, das mittels Freilaufmechanismus mit dem ersten Antriebsrad und mit dem zweiten Antriebsrad verbunden ist. Das erste Antriebsrad ist mit der ersten oberen Zahnstange am Kolbenstangenende des ersten Kolbens des Hydraulikgetriebes und das zweite Arbeitsrad mit der zweiten oberen Zahnstange am Kolbenstangenende des zweiten Kolbens des Hydraulikgetriebes verbunden. Zwischen der ersten Kolbenstange und der zweiten Kolbenstange befindet sich ein Kupplungs-Zwischenrad, das drehbar gelagert und mit der Innenzahnstange an der ersten Kolbenstange und an der zweiten Kolbenstange im mittleren Teil der Kolbenstangen von Kolben des Hydraulikgetriebes verbunden ist. Das Hydraulikgetriebe ist mit Zwillingszylindern ausgestattet, mit denen Zylinder der Pumpen vom Hydraulikgetriebe verbunden sind. Jeder der Zylinder, des ersten Horizontalkolbens und des zweiten Horizontalkolbens besitzt ein gesteuertes Nadelventil, das von einer einstellbaren Einheit auf den Kolbenstangen sitzend gesteuert wird. Die Steuereinheit der hydraulischen Kopplung enthält die erste Öffnungsklaue und die zweite Öffnungsklaue sowie die erste Schließklaue und die zweite Schließklaue, entsprechend mit dem ersten Nocken und dem zweiten Nocken verbunden, die mit dem Nadelventil des ersten Zylinders und mit dem Nadelventil des zweiten Zylinders des Hydraulikgetriebes verbunden sind.

Die Lösung gemäß Erfindung erlaubte ein System mit universeller Anwendung, anstatt der bisherigen Kurbel-, Kurbelführung-Systeme für Mechanismen der Antriebsübertragung zu bekommen. Die Anwendung des Systems gemäß Erfindung sichert, dass die Kraft kontinuierlich während ihrer Wirkung, ohne Verluste für ein Totgang, in ihrer maximalen Höhe ausgenutzt wird, wodurch der volle Kraftimpuls ausgenutzt wird.

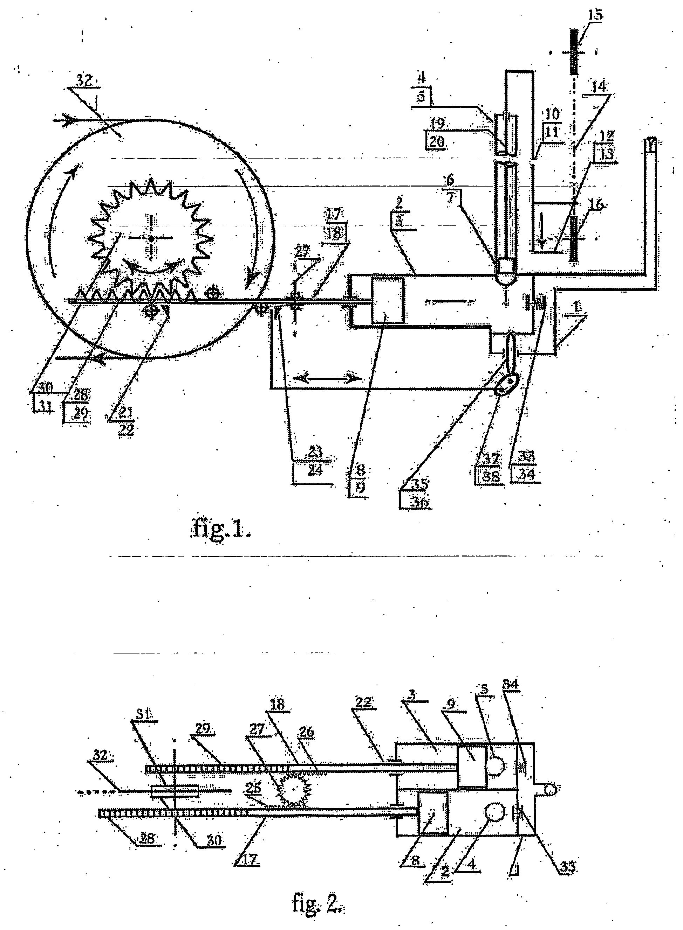

Der Gegenstand der Erfindung ist an einem Ausführungsbeispiel in der Zeichnung dargestellt, von der die Fig. 1 das Systemschema zur Umwandlung einer Linearbewegung in eine Drehbewegung im Axialschnitt, die Fig. 2 das Schema eines Hydraulikgetriebes in Draufsicht und die Fig. 3 das Schema der Stösseleinheit einer Hydraulikpumpe in Ansicht darstellt.

Das System zur Umwandlung einer Linearbewegung in eine Drehbewegung mit voller Ausnutzung des Kraftimpulses besteht aus einer aktiven Zwillingsbaugruppe und der Wandlerbaugruppe sowie einer Baugruppe zur Steuerung der linearen Verschiebung in eine Drehverschiebung. Das System enthält hydraulische Zwillingswandler der linearen Bewegung, integriert mit einem mit der Arbeitsflüssigkeit gefülltem Ausgleichbehälter. Die Wandler sind mit dem Zahnstangenmechanismus der Drehbewegung verbunden. Jeder dieser Wandler besteht aus einer hydraulischen Pumpe und einem Hydraulikgetriebe, die hydraulisch steuerbar gekoppelt sind. Die erste Kolbenstange 17 des ersten Horizontalkolbens 8 und die zweite Kolbenstange 18 des zweiten Horizontalkolbens 9 bilden Führungen, die die Linearbewegung auf das eingreifende Zahnrad 32 der angetriebenen Einheit übertragen. Das Zahnrad 32 ist drehbar in einer, in der Zeichnung nicht gezeigten, angetriebenen Einhelt gelägert.

Das System besteht aus zwei parallelen, wechselweise wirkenden Wandler. Der erste Wandler enthält den ersten Vertikalkolben 6 und den ersten Horizontalkolben 8. Der erste Vertikalkolben 6 ist aktiv und der erste Horizontalkolben 8 ist passiv. Die erste Kolbenstange 19 des ersten Vertikalkolben 6 ist mit dem ersten Rahmen 10 und dem ersten Stössel 12 verbunden, der mit der Kupplungskette 14 verbunden ist, die sich auf dem ersten 15 und auf dem zweiten Rad 16 verschiebt. Die Kupplungskette 14 sichert die wechselweise Wirkung des ersten aktiven Kolbens 6 mit dem parallelen aktiven Kolben 7. Der erste Horizontalkolben 8 ist mit der ersten Kolbenstange 17 verbunden, auf der die erste einstellbare Öffnungsklaue 23 sowie die erste einstellbare Schließklaue 21 angeordnet sind. Die erste Kolbenstange 17 besitzt am Innenrad eine Innenzahnstange 25, die der Drehung des Zahnrades 27 zum Rücklauf der zweiten Kolbenstange 18 und des zweiten Kolben 9 dient. Die erste obere Zahnstange 28 dagegen arbeitet mit dem ersten Antriebsrad 30 zusammen, das das Arbeitszahnrad 32 antreibt. Sowohl das erste Antriebsrad 30 wie auch das parallele zweite Antriebsrad 31 sind mittels eines Freilaufmechanismus mit dem Arbeitsrad 32 gekoppelt. Die erste einstellbare Öffnungsklaue 23 dient zur Öffnung mittels Nockenmechanismus 37 des ersten Nadelventils 35, die erste Schließklaue 21 zur Schließung mittels Nockenmechanismus 37 des ersten Nadelventils 35.

Analog wie der erste Wandler enthält der zweite Wandler den zweiten Vertikalkolben 7 und den zweiten Horizontalkolben 9. Der zweite Vertikalkolben 7 ist aktiv, der zweite Horizontalkolben 9 ist dagegen passiv. Die zweite Kolbenstange 20 des zweiten Vertikalkolben 7 ist mittels zweiten Kupplungsrahmen 11 und zweiten Stössel 13 verbunden, wobei der zweite Stössel 13 mit der, auf den ersten Rad 15 und dem zweiten Rad 16 verlaufenden Kupplungskette verbunden ist. Die Kupplungskette 14 sichert die wechselweise Wirkung des zweiten Vertikalkolben 7. Der zweite Horizontalkolben 9 ist mit der zweiten Kolbenstange 18, mit der zweiten Öffnungsklaue 24 sowie zweite Schließklaue 22 ausgestattet verbunden. Auf der zweiten Kolbenstange 18 auf dem oberen und inneren Rand befindet sich entsprechend die zweite obere Zahnstange 29 und die zweite Innenzahnstange 26. Die zweite Innenzahnstange 26 dient zur Drehung des Zwischenrades 27, das den Rücklauf der ersten Kolbenstange 17 des ersten Horizontalkolbens 8 bewirkt. Die zweite obere Zahnstange 29 arbeitet mit dem zweiten Antriebsrad 31 zusammen, das das Arbeitsrad 32 antreibt. Das zweite Antriebsrad 31 und das erste Antriebsrad 30 sind mittels eines Freilaufmechanismus mit dem Antriebsrad 32 gekoppelt. Die einstellbare zweite Öffnungsklaue 24 ist zum Öffnen des Nockenmechanismus 32 des zweiten Nadelventlis 36, die zweite Schließklaue 22 dagegen zur Schließung des Nockenmechanismus 38 des zweiten Nadelventils 36.

Die Möglichkeit einer Regelung der Position von der ersten Öffnungsklaue 23 und der zweiten Öffnungsklaue 24 zum Antrieb des Mechanismus des ersten Nockens 37 des ersten NadelventIls 35 und des zweiten Nockens 38 des zweiten Nadelventils 36 erlaubt eine hydraulische Entkopplung der Pumpe vom Hydraulikgetriebe und somit eine beliebige Regelung des Drehungsgrades des Arbeitsgrades 32 unabhängig vom Hub des ersten Vertikalkolbens 6 und des zweiten Vertikalkolbens 7.

Beide Wandlersysteme sind mit dem, mit Arbeitsflüssigkeit gefüllten Ausgleichsbehälter 1 integriert.

Mit Ausnahme des Arbeitsgrades 32, das sich ausschließlich in eine Richtung dreht, bewirkt jede Bewegung im ersten Wandler, dank Kopplungen, eine umgekehrte Reaktion im zweiten Wandler. Die Kraft für die umgekehrte Reaktion übersteigt nicht mehr als 5 % der angebrachten Kraft an den ersten Stössel 12 und dem zweiten Stössel 13, die sich vertikal geradlinig bewegen. Der Arbeitszyklus beginnt in der Zeit, wenn sich im ersten Wandler der erste Vertikalkolben 6 in der oberen Lage befindet und der erste Horizontalkolben 8 nach rechts zurückgefahren ist, wobei das erste Nadelventil 35 geschlossen ist. Im zweiten Wandler ist es umgekehrt. Das Anbringen einer Kraft in der vertikalen Richtung an den ersten Stössei 12 bewirkt eine Bewegung des ersten Vertikalkolbens 6 nach unten. Das bewirkt ein Umpumpen der Flüssigkeit in den ersten Horizontalzylinder 2 und die Bewegung des ersten Kolbens 8 mit einer Kraft und einem Hub nach den bekannten Prinzip einer hydraulischen Presse. Die Verschiebung der ersten Kolbenstange 17 dreht das erste Antriebsrad 30 um einen Teil der Drehung, das eine Drehung um ebensoviel des Arbeitsrades 32 bewirkt. In der linken Endlage bewirkt die erste Öffnungsklaue 23 eine Drehung des ersten Nockens 37, das die Öffnung des ersten Nadelventils 35 erlaubt mit der Folge der hydraulischen Entkopplung der hydraulischen Pumpe vom Hydraulikgetriebe und ermöglicht somit den Durchfluss der Arbeitsflüssigkeit zum Ausgleichbehälter 1. Parallel mit dem Arbeitszyklus eines Wandlers verläuft der Rücklaufzyklus im zweiten (entkoppelten) Wandler. Und so, die Bewegung des ersten Vertikalkolbens 6 im ersten Wandler nach unten bewirkt, dank Kopplung mittels Kette 14, die Bewegung des zweiten Vertikalkolbens 7 nach oben. Das zweite Nadelventil 36 ist offen, die Arbeitsflüssigkeit dank ihres hydrostatischen Druckes und der Bewegung des zweiten Horizontalkolbens 9 nach rechts füllt den Raum unter dem zweiten Vertikalkolben 7 aus. Bei einer schnellen Bewegung nach oben und infolge Spiele in den Koppitingsroechanismen könnten die Geschwindigkeit und die Genauigkeit den Auffüllung nicht ausreichend werden, deswegen sind der erste Horizontalzylinder 2 und der zweite 3 mit Rücklaufventilen entsprechend 33 und 34 ausgestattet, die derart wirken, dass sie bei der Bewegung nach oben aus dem Ausgleichbehälter 1 die Arbeitsflüssigkeit auch dann durchlassen, wenn das erste Nadelventil 35 bzw. das zweite Nadelventü 36 schon geschlossen werden. Das wirkt dem entgegen, dass unter dem ersten Vertikalkolben 6 und dem zweiten 7 ein leerer Raum entsteht. Der zweite Horizontalkolben 9 im zweiten Wandler wird mit der zweiten Innenzahnstange 26 zurückgesetzt, die vom Zwischenrad 27, durch die erste Innenzahnstange 25 gedreht, angetrieben wird. Dank dessen, dass der zweite Wandler im Rücklaufzyklus beidseitig durch das zweite Nadelventil 36 und das zweite Rücklaufventil 34 offen ist (entkoppelt), braucht die Kraft, die wir zum Zurückfahren der Kolben an den Anfang des Arbeitszyklus benötigen, nur die minimale Reibung der Kolben an den Zylinderwänden zu bewältigen.

In dem System nach der Erfindung wird das Prinzip einer hydraulischen Presse genutzt, wo die Drehkraft kontinuierlich tangential zur Drehung wirkt, also in der ganzen Wirkungszeit auf dem Maximumniveau ausgenutzt wird, unabhängig vom Hub ihres Angriffspunktes also günstiger als in einem bekannten Kurbelmechanismus (z. B. Fahrradpedal). Dadurch erhalten wir eine Übersetzung mit viel höheren Werten als die, die in bekannten Lösungen erzielt werden.

Die Lösung findet in Mechanismen eines Muskelantriebes bei Leichtfahrzeugen, bei Einstellgeräten mit genauer Linear- oder Drehverschiebung mit beliebig steuerbarer Kraft- oder Drehmomentgröße Anwendung.

### Bezugszeichenliste

- 1.: Ausgleichsbehälter
- 2.: erster Horizontalzylinder
- 3.: zweiter Horizontalzylinder
- 4.: erster Vertikalzylinder
- 5.: zweiter Vertikalzylinder
- 6.: erster Vertikalkolben
- 7.: zweiter Vertikalkolben
- 8.: erster Horizontalkolben
- 9.: zweiter Horizontalkolben
- 10.: erster Kupplungsrahmen
- 11.: zweiter Kupplungsrahmen
- 12.: erster Stössel
- 13.: zweiter Stössel
- 14.: Kupplungskette
- 15.: erstes Kettenzahnrad
- 16.: zweites Kettenzahnrad
- 17.: erste Kolbenstange des Horizontalkolbens
- 18.: zweite Kolbenstange des Horizontalkolbens
- 19.: erste Kolbenstange des Horizontalkolbens
- 20.: zweite Kolbenstange des Horizontalkolbens
- 21.: erste Schließklaue
- 22.: zweite Schließklaue
- 23.: erste Öffnungsklaue
- 24.: zweite Öffnungsklaue
- 25.: erste Innenzahnstange
- 26.: zweite Innenzahnstange
- 27.: Kupplungs-Zwischenrad
- 28.: erste obere Zahnstange
- 29.: zweite obere Zahnstange
- 30.: erstes Antriebsrad
- 31.: zweites Antriebsrad
- 32.: Arbeitsrad
- 33.: erstes Rücklaufventil
- 34.: zweites Rücklaufventil
- 35.: erstes Nadelventil
- 36.: zweites Nadelventil
- 37.: erster Nocken
- 38.: zweiter Nocken

## Patentansprüche

1. Ein System zur Umwandlung einer Linearbewegung in eine Drehbewegung, bestehend aus einer aktiven Einheit und einem Energieumwandlungsmechanismus sowie eines Mechanismus zum Steuern der Linearverschiebung in eine Drehbewegung, dabei eine erste Kolbenstange (17) und eine zweite Kolbenstange (18) eines entsprechenden ersten Horizontalkolbens (8) und eines zweiten Horizontalkolbens (9) eines entsprechenden passiven hydraulischen ersten Horizontalzylinder (2) und eines passiven hydraulischen zweiten Horizontalzylinder (3) Führungen darstellen, die die Linearbewegung des ersten Horizontalkolbens (8) und des zweiten Horizontalkolbens (9) in eine Drehbewegung eines drehbar am Gestell gelagerten Arbeitszahnrades (32) überträgt, wobei dieses Arbeitszahnrad (32) mit einer angetriebenen Einheit verbunden ist, **dadurch gekennzeichnet, dass** es zwei hydraulische Wandler enthält, die mit einem gemeinsamen Ausgleichbehälter (1) mit einer Arbeitsflüssigkeit gefüllt integriert, mit einem Zahnstangenmechanismus der Drehbewegung verbunden sind, wobei jeder Wandler aus einem hydraulischen ersten bezichungsweise zweiten Vertikalzylinder (4; 5) sowie aus dem passiven hydraulischen ersten berichungsweise zweiten Horizontalzylinder (2; 3), steuerbar hydraulisch gekoppelt besteht.

2. Ein System nach Anspruch 1, **dadurch gekennzeichnet, dass** die erste Kolbenstange (19) und die zweite Kolbenstange (20) entsprechend des ersten Vertikalkolbens (6) und des zweiten Vertikalkolbens (7) durch steife, mit dem ersten Stössel (12) und dem zweiten Stössel (13) ausgestattete steife Zugstangen verbunden sind, wobei die Stössel mit einer Kettenkupplung verbunden sind.

3. Ein System nach Anspruch 1, **dadurch gekennzeichnet, dass** der Drehmechanismus ein Arbeitsrad (32) enthält, das mit zwei Zahnrädern, dem ersten (30) und dem zweiten (31), die mit zwei Zahnstangen, der ersten oberen (28) und der zweiten (29) auf den oberen Rändern der ersten Kolbenstange (17) und der zweiten (18) des ersten Kolbens (8) und des zweiten Kolbens (9) des Hydraulikgetriebes zusammenarbeiten verbunden ist, wobei zwischen der ersten Kolbenstange (17) und der zweiten Kolbenstange (18) sich ein Kupplungs-Zwischenrad (27) befindet, das drehbar gelagert und mit der ersten, im Mittelteil der ersten Kolbenstange (17) und der zweiten Kolbenstange (18) des ersten Kolbens (8) und des zweiten Kolbens (99 des Hydraulikgetriebes befindlichen Innenzahnstange (25) und der zweiten Innzahnstange (26) verbunden ist.

4. Ein System nach Anspruch 1, **dadurch gekennzeichnet, dass** das Hydraulikgetriebe mit horizontalen Zylindern, erster (2) und zweiter (3), ausgestattet ist, mit denen aktive Pumpen-Vertikalzylinder, erster (4) und zweiter (5), verbunden sind, wobei der erste Horizontalzylinder (2) und der zweite Horizontalzylinder (3) des Hydraulikgetriebes entsprechend das erste Nadelventil (35) und das zweite Nadelventil (36) besitzen, die von einer, auf der ersten horizontalen Kolbenstange (17) und auf der zweiten horizontalen Kolbenstange (18) sitzender Steuereinheit gesteuert werden.

5. Ein System nach Anspruch 4, **dadurch gekennzeichnet, dass** die Steuereinheit aus entsprechend der ersten Öffnungsklaue (23) und der zweite Öffnungsklaue (24) sowie der ersten Schließklaue (21) und der zweiten Schließklaue (22) besteht, die über ein Zugangssystem der ersten Nocken (37) und den zweiten Nocken (38) drehen, die entsprechend mit dem ersten Nadelventil (35) des ersten Horizontalzylinder (2) und dem zweiten Nadelventil (36) des zweiten Horizontalzylinder (3) zusammenarbeiten.

6. Ein System nach Anspruch 1, **dadurch gekennzeichnet**, das der erste Vertikalzylinder (4) und der zweite Vertilinder (5) der Hydraulikpumpen entsprechend mit dem ersten Rücklaufventli (33) und dem zweiten Rücklaufventil (34) ausgestattet sind.

## Claims

1. A system for converting a linear motion into a rotational motion consisting of an active unit and an energy conversion mechanism as well as a mechanism for controlling the conversion of linear displacement into rotational motion, including a first piston rod (17) and a second piston rod (18) of a suitable first horizontal piston (8) and a second horizontal piston (9) of a suitable passive first hydraulic horizontal cylinder (2) and a passive second hydraulic horizontal cylinder (3), respectively, representing guide mechanisms that transfer the linear motion of the first horizontal piston (8) and the second horizontal piston (9) into rotational motion of a revolving working gear (32) supported on the frame by bearings, whereas this working gear (32) is connected to a drive unit, **characterized in that** the system contains two hydraulic converters connected to a common, integrated compensating reservoir (1) filled with a working fluid and to the rotational motion via a gear rack mechanism, whereas each converter consists of a first and second hydraulic vertical cylinder (4, 5) and a passive first and second horizontal cylinder (2, 3), respectively, controlled via hydraulic links.

2. A system according to Claim 1 **characterized in that** the first piston rod (19) and the second piston rod (20) corresponding to the first vertical piston (6) and second vertical piston (7) are connected via stiff tie rods equipped with the first plunger (12) and the second plunger (13), whereas the plungers are connected by a chain coupling.

3. A system according to Claim 1 **characterized in that** the rotary mechanism contains a working gear (32) connected to two toothed gears, the first gear (30) and the second gear (31), that interact with two gear racks, the first upper (28) and second (29) gear racks on the upper edges of the first (17) and second piston rod (18) of the first (8) and second piston (9), respectively, of the hydraulic drive, whereas there is an intermediate coupling gear (27) between the first piston rod (17) and the second piston rod (18) supported by rotary bearings and connected to the first gear rack (25) and second gear rack (26) located inside the hydraulic drive in the center part of the first piston rod (17) and the second piston rod (18) of the first piston (8) and the second piston (9).

4. A system according to Claim 1 **characterized in tha**t the hydraulic drive is equipped with horizontal cylinders, a first (2) and second (3), connected to active vertical pump cylinders, a first (4) and second (5), whereas the first horizontal cylinder (2) and the second horizontal cylinder (3) of the hydraulic drive are equipped with the first needle valve (35) and the second needle valve (36) controlled by a control unit mounted on the first horizontal piston rod (17) and second horizontal piston rod (18), respectively.

5. A system according to Claim 4 **characterized in that** the control unit consists of the first opening claw (23) and the second closing claw (22) rotated via an access system of the first cam (37) and the second cam (38), respectively, that interact accordingly with the first needle valve (36) of the first horizontal cylinder (2) and the second needle valve (36) of the second horizontal cylinder (3).

6. A system according to Claim 1 **characterized in that** the first vertical cylinder (4) and the second vertical cylinder (5) of the hydraulic pump are equipped respectively with the first return valve (33) and the second return valve (34).

## Revendications

1. Un système visant à convertir un mouvement linéaire en un mouvement rotatif, composé d'une unité active et d'un mécanisme de conversion d'énergie ainsi que d'un mécanisme visant à commander le mouvement linéaire en un mouvement rotatif. Représenter une première tige de piston (17) et une seconde tige de piston (18) d'un premier piston horizontal analogue (8) et d'un second piston horizontal analogue (9) d'un premier cylindre horizontal hydraulique et passif analogue (2) et d'un second cylindre horizontal hydraulique et passif analogue (3) qui transmet le mouvement linéaire du premier piston horizontal (8) et du second piston horizontal (9) en un mouvement rotatif d'une roue d'engrenage de travail (32) rotative montée sur le bâti. Cette roue d'engrenage de travail (32) étant reliée à une unité actionnée. Ce système est ***caractérisé* par le fait qu'**il contient deux convertisseurs hydrauliques qui sont intégrés avec un réservoir de compensation (1) rempli d'un liquide de travail, qui sont reliés à un mécanisme de crémaillère du mouvement rotatif. Chaque convertisseur est composé d'un premier resp. second cylindre vertical (4, 5) hydraulique ainsi que du premier resp. second cylindre horizontal (2, 3) hydraulique passif, orientables et couplés de manière hydraulique.

2. Un système selon la revendication 1 ***caractérisé* par le fait que** la première tige de piston (19) et la seconde tige de piston (20) sont reliées, en analogie au premier piston vertical (6) et au second piston vertical (7), au premier poussoir (12) et au second poussoir (13) par des barres de traction rigides. Les poussoirs étant reliés à un attelage à chaînes.

3. Un système selon la revendication 1 ***caractérisé* par le fait que** le mécanisme de rotation contient une roue de travail (32) reliée à deux roues d'engrenage, la première (30) et la seconde (31), qui fonctionnement avec deux crémaillères, la première en haut (28) et la seconde (29) sur les bords supérieurs de la première tige de piston (17) et de la seconde tige de piston (18) du premier piston (8) et du second piston (9) de la transmission hydraulique. Entre la première tige de piston (17) et la seconde tige de piston (18) se trouve un roue intermédiaire d'attelage (27) qui est montée sur palier et orientable et qui est reliée à la première crémaillère intérieure (25) et à la seconde crémaillère intérieure (26) se trouvant dans la partie centrale de la première tige de piston (17) et de la seconde tige de piston (18) du premier piston (8) et du second piston (9) de la transmission hydraulique.

4. Un système selon la revendication 1 ***caractérisé* par le fait que** la transmission hydraulique est équipé de cylindre horizontaux, premier (2) et second (3), auxquels sont reliés des corps de pompe verticaux actifs, premier (4) et second (5). Le premier cylindre horizontal (2) et le second cylindre horizontal (3) de la transmission hydraulique possèdent le premier pointeau (35) et le second pointeau (36) qui sont commandés par une unité de commande se trouvant sur la première tige de piston horizontale (17) et sur la seconde tige de piston horizontale.

5. Un système selon la revendication 4 ***caractérisé* par le fait que** l'unité de commande est composée du premier doigt d'ouverture (23) et du second doigt d'ouverture ainsi que du premier doigt de fermeture (21) et du second doigt de fermeture (22) qui font tourner la première came (37) et la seconde came (38) par un système d'accès. Les deux cames fonctionnent réciproquement avec le premier pointeau (35) du premier cylindre horizontal (2) et le second pointeau (36) du second cylindre horizontal (3).

6. Un système selon la revendication 1 ***caractérisé* par le fait que** le premier cylindre vertical (4) et le second cylindre vertical (5) de la pompe hydraulique sont respectivement équipés du premier clapet de retour (33) et du second clapet de retour (34).
